(19) **Europäisches Patentamt**
**European Patent Office**
**Office européen des brevets**

(11) **EP 1 743 098 B1**

(12) **EUROPÄISCHE PATENTSCHRIFT**

(45) Veröffentlichungstag und Bekanntmachung des Hinweises auf die Patenterteilung:
**03.06.2009 Patentblatt 2009/23**

(21) Anmeldenummer: **05708031.9**

(22) Anmeldetag: **16.02.2005**

(51) Int Cl.:
**F02P 5/15** *(2006.01)*       **F02D 41/14** *(2006.01)*

(86) Internationale Anmeldenummer:
**PCT/EP2005/050688**

(87) Internationale Veröffentlichungsnummer:
**WO 2005/111410 (24.11.2005 Gazette 2005/47)**

(54) **VERFAHREN UND VORRICHTUNG ZUM STEUERN EINER BRENNKRAFTMASCHI-NE**

METHOD AND DEVICE FOR CONTROLLING AN INTERNAL COMBUSTION ENGINE

PROCEDE ET DISPOSITIF DE COMMANDE D'UN MOTEUR A COMBUSTION INTERNE

(84) Benannte Vertragsstaaten:
**FR GB**

(30) Priorität: **07.05.2004 DE 102004022593**

(43) Veröffentlichungstag der Anmeldung:
**17.01.2007 Patentblatt 2007/03**

(73) Patentinhaber: **Continental Automotive GmbH**
**30165 Hannover (DE)**

(72) Erfinder:
• **JEHLE, Martin**
**93051 Regensburg (DE)**
• **SCHNEIDER, Dirk**
**85276 Pfaffenhofen (DE)**

(56) Entgegenhaltungen:
**EP-A- 1 074 717       EP-A- 1 258 619**
**EP-A- 1 270 915       EP-A- 1 323 902**
**DE-A1- 10 332 825       DE-A1- 10 340 439**
**US-A1- 2004 069 272**

Printed by Jouve, 75001 PARIS (FR)

**Beschreibung**

Die Erfindung betrifft ein Verfahren und eine Vorrichtung zum Steuern einer Brennkraftmaschine.

An Brennkraftmaschinen werden zunehmend hohe Anforderungen bezüglich deren Leistung und Wirkungsgrad gestellt. Gleichzeitig müssen aufgrund strenger, gesetzlicher Vorschriften auch die Emissionen gering sein. Derartige Anforderungen können gut erfüllt werden, wenn die Brennkraftmaschine mit Gaswechselventilen und entsprechenden Antrieben für diese ausgestattet sind, bei denen je nach Betriebspunkt der Brennkraftmaschine der Ventilhubverlauf unterschiedlich ist. Dadurch können Drosselverluste beim Ansaugen der Luft verringert werden und gegebenenfalls schnell hohe Abgasrückführraten eingestellt werden.

Es ist bekannt, den Ventilhub eines Gaseinlassventils der Brennkraftmaschine zwischen einem geringen und einem hohen Ventilhub zu verstellen. So ist beispielsweise der Porsche 911 Turbo mit einer Vorrichtung zum verstellen des Ventilhubs des Gaseinlassventils und des Gasauslassventils ausgestattet. Ferner ist die Brennkraftmaschine dieses Fahrzeugs mit einer Nockenwelle versehen, auf der für jedes Gaseinlassventil eine Nocke mit einem geringen Hub und zwei weitere Nocken mit einem höheren Hub ausgebildet sind. Der Nockenhub wird mittels einer Übertragereinheit auf das Gaseinlassventil übertragen. Die Übertragereinheit ist als Tassenstößel ausgebildet, der ein Zylinderelement und ein konzentrisch zu diesem angeordnetes Ring-Zylinderelement umfasst. Die Nocke mit geringem Hub wirkt auf das Zylinderelement ein während die Nocken mit dem höheren Hub auf das Ring-Zylinderelement einwirken. Abhängig von einer Schaltstellung des Tassenstößels wird entweder der geringe oder der höhere Hub auf das Gaseinlassventil übertragen. Im Leerlaufbetrieb der Brennkraftmaschine wird der geringe Nockenhub auf das Gaseinlassventil übertragen. Dadurch ergeben sich verringerte Reibverluste aufgrund des geringen Durchmessers der in diesem Betriebszustand verwendeten Nocke und des Zylinderelements und des niedrigeren Ventilhubs.

Ferner wird eine höhere Ladungsbewegung erreicht. Dadurch können die Emissionen der Brennkraftmaschine gesenkt werden und gleichzeitig der Kraftstoffverbrauch gering gehalten werden. Der geringe Ventilhub wird bei geringer und mittlerer. Last beibehalten. Drosselverluste können zusätzlich durch eine entsprechende Phasenverstellung zwischen dem Gaseinlassventil und dem Gasauslassventil und einer daraus resultierenden internen Abgasrückführrate verringert werden. Bei hohen Lastanforderungen an die Brennkraftmaschine wird auf den höheren Ventilhub umgeschaltet.

Für einen hohen Fahrkomfort eines Fahrzeugs, in dem eine derartige Brennkraftmaschine angeordnet ist, ist es wichtig, dass eine geringe Laufunruhe der Brennkraftmaschine gewährleistet ist. Dies ist insbesondere in Betriebspunkten eine große Herausforderung, in denen ein Teil der Gaseinlassventile mit hohem Ventilhub und ein anderer Teil mit geringem Ventilhub betrieben werden.

Aus der EP 1 323 902 A2 ist ein Verfahren zum Steuern einer Brennkraftmaschine bekannt, die für die Gaseinlassventile eine variable Ventilzeitsteuervorrichtung umfasst. Ein Sollöffnungszeitpunkt für ein Gaseinlassventil wird ermittelt. Fer ner wird ein Istöffnungszeitpunkt für das Gaseinlassventil ermittelt. Abhängig von einer Abweichung zwischen dem Sollwert und dem Istwert für den Öffnungszeitpunkt des Gaseinlassventils wird ein Zündwinkel korrigiert.

Die Aufgabe der Erfindung ist es, ein Verfahren und eine Vorrichtung zum Steuern einer Brennkraftmaschine zu schaffen, das beziehungsweise die eine geringe Laufunruhe der Brennkraftmaschine ermöglicht.

Die Aufgabe wird gelöst durch die Merkmale der unabhängigen Patentansprüche. Vorteilhafte Ausgestaltungen der Erfindung sind in den Unteransprüchen gekennzeichnet.

Die Erfindung zeichnet sich aus durch ein Verfahren und eine entsprechende Vorrichtung zum Steuern einer Brennkraftmaschine mit mehren Zylindern, die Brennräume aufweisen und denen je eine Zündkerze zugeordnet ist, die zum Zünden des Luft/Kraftstoff-Gemisches in dem Brennraum ausgebildet ist, und mit mindestens zwei Einstellvorrichtungen zum Einstellen der Luftzufuhr zu den Brennräumen verschiedener Zylinder. Jeweils ein individueller Zündwinkel wird ermittelt für jede von mindestens zwei Gruppen an Zylindern, denen jeweils die gleiche Luftmasse pro Arbeitsspiel zugeführt werden soll und während deren jeweiligen Arbeitakten das gleiche Verlustdrehmoment maßgeblich ist. Das maßgebliche Verlustdrehmoment ist dasjenige, das dem jeweiligen Zylinder zugeordnet ist, der sich während des jeweiligen Arbeitstaktes des jeweilige Zylinders der jeweiligen Gruppe in seinem Ansaugtakt befindet. Der individuelle Zündwinkel je einer Gruppe wird ermittelt abhängig von dem für die jeweilige Gruppe maßgeblichen Verlustdrehmoment.

Die Erfindung beruht auf der Erkenntnis, dass bei einem gewünschten gleichen tatsächlichen Drehmoments jeder Gruppe an Zylindern die jeweiligen indizierten Drehmomente der jeweiligen Gruppen der Zylinder sich nur durch die ihnen zugeordneten Verlustdrehmomente unterscheiden dürfen. Ferner nutzt sie die Erkenntnis, dass gerade der Zylinder, der sich in seinem Ansaugtakt befindet, das Verlustdrehmoment innerhalb des Kurbelwellenwinkelbereichs maßgeblich beeinflusst, während dessen sich ein anderer Zylinder in seinem Arbeitstakt befindet.

So ist einfach eine Drehmomentgleichstellung über ein einfaches Anpassen des jeweiligen für die Gruppe individuellen Zündwinkels abhängig von dem für die jeweilige Gruppe maßgeblichen Verlustdrehmoment möglich und es kann auf diese Weise eine sehr geringe Laufunruhe der Brennkraftmaschine gewährleistet werden.

Ein indiziertes Drehmoment ist jeweils das Drehmoment, das durch die Verbrennung des in dem jeweiligen Zylinder befindlichen Luft/Kraftstoff-Gemisches erzeugt wird ohne Verluste zu berücksichtigen wie sie beispielsweise

durch Reibung oder Pumparbeit auftreten. Das tatsächliche Drehmoment ist hingegen dasjenige Drehmoment, das dann diese Verluste berücksichtigt. Das tatsächliche Drehmoment ist somit das Drehmoment, das kupplungsseitig der Kurbelwelle der Brennkraftmaschine oder an einem weiteren Punkt bis hin zu einem Rad eines Fahrzeugs abgegeben wird, in dem die Brennkraftmaschine angeordnet ist.

In einer vorteilhaften Ausgestaltung der Erfindung wird der individuelle Zündwinkel je einer Gruppe ermittelt abhängig von einer Differenz des für die jeweilige Gruppe maßgeblichen Verlustdrehmoments und dem maßgeblichen Verlustdrehmoment einer anderen Gruppe. Auf diese Weise kann einfach eine sehr gute Drehmomentgleichstellung der Zylinder erfolgen, wenn abhängig von dem Fahrerwunsch das indizierte Drehmoment ermittelt wird, bei dem nicht zwischen den unterschiedlichen Verlustdrehmomenten für die jeweiligen Gruppen unterschieden wird, sondern ein durchschnittliches pro Arbeitszyklus der Brennkraftmaschine wirkendes Verlustdrehmoment zugrunde gelegt wird.

Gemäß einer weiteren vorteilhaften Ausgestaltung der Erfindung wird der individuelle Zündwinkel begrenzt auf einen minimalen und/oder auf einen maximalen Zündwinkel. Auf diese Weise kann einfach bei geeigneter Wahl des minimalen und maximalen Zündwinkels verhindert werden, dass Klopfen oder Zündaussetzer oder unzulässig hohe Abgastemperaturen auftreten.

Gemäß einer weiteren vorteilhaften Ausgestaltung der Erfindung wird, wenn ein individueller Zündwinkel, der einer Gruppe zugeordnet ist, den minimalen Zündwinkel erreicht, ein anderer individueller Zündwinkel, der einen anderen Gruppe zugeordnet ist, abhängig von dem minimalen Zündwinkel ermittelt. So können zuverlässig Zündaussetzer und unzulässig hohe Abgastemperaturen verhindert werden und auch, soweit wie möglich, das gewünschte Drehmoment bei einer geringen Laufunruhe eingestellt werden.

Gemäß einer weiteren vorteilhaften Ausgestaltung der Erfindung wird, wenn ein zylinderindividueller Zündwinkel, der einer Gruppe an Zylindern zugeordnet ist, den maximalen Zündwinkel erreicht, ein anderer Zündwinkel der einer anderen Gruppe an Zylindern zugeordnet ist, abhängig von dem maximalen Zündwinkel ermittelt. So kann zuverlässig ein Klopfen verhindert werden und auch, soweit wie möglich, das gewünschte Drehmoment bei einer geringen Laufunruhe eingestellt werden.

Ausführungsbeispiele der Erfindung sind im folgenden anhand der schematischen Zeichnungen erläutert. Es zeigen:

Figur 1     eine Brennkraftmaschine mit einer Steuereinrichtung,
Figur 2     eine weitere Ansicht von Teilen der Brennkraftmaschine gemäß Figur 1,

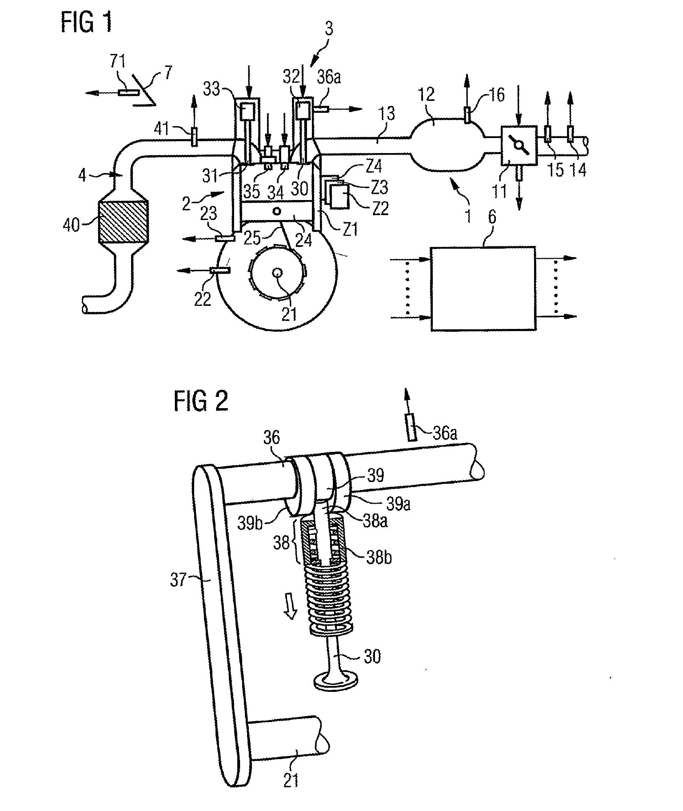

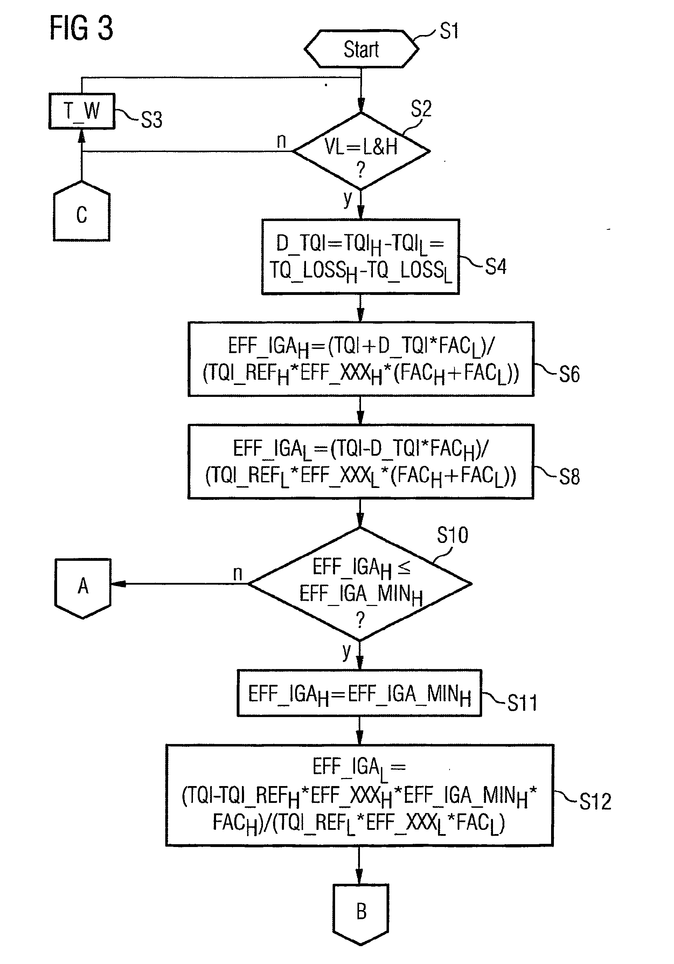

Figur 2     und 3 ein Programm zum Steuern der Brennkraftmaschine, das in der Steuereinrichtung abgearbeitet wird und

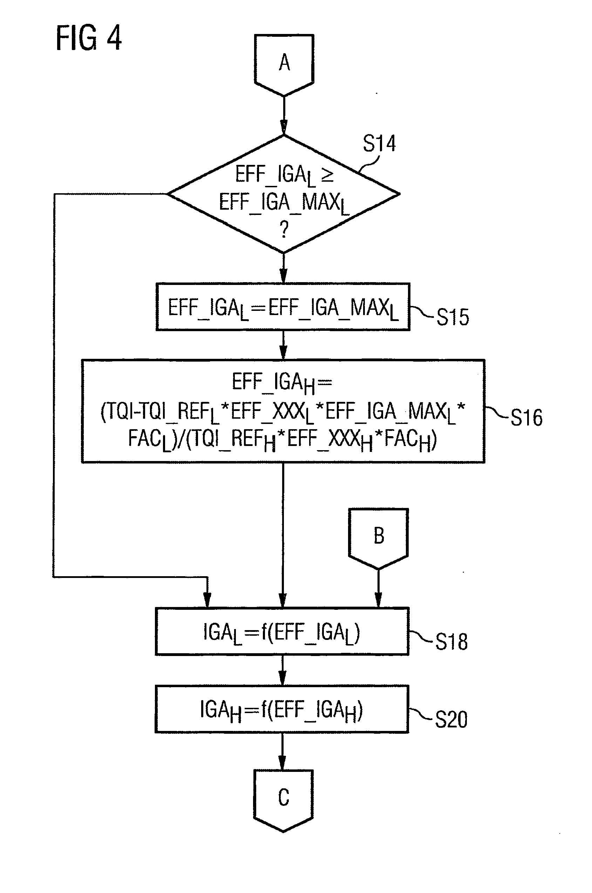

Figur 4     ein weiteres Programm zum Steuern der Brennkraftmaschine, das in der Steuereinrichtung abgearbeitet wird.

Elemente gleicher Konstruktion oder Funktion sind mit den gleichen Bezugzeichen gekennzeichnet.

Eine Brennkraftmaschine (Figur 1) umfasst einen Ansaugtrakt 1, einen Motorblock 2, einen zylinderkopf 3 und einen Abgastrakt 4. Der Ansaugtrakt umfasst vorzugsweise eine Drosselklappe 11, ferner einen Sammler 12 und ein Saugrohr 13, das hin zu einem Zylinder Z1 über einen Einlasskanal in den Motorblock 2 geführt ist. Der Motorblock 2 umfasst ferner eine Kurbelwelle 21, welche über eine Pleuelstange 25 mit dem Kolben 24 des Zylinders Z1 gekoppelt ist.

Der Zylinderkopf 3 umfasst einen Ventiltrieb mit einem Gaseinlassventil 30, einem Gasäuslassventil 31 und Ventilantrieben 32, 33. Der Antrieb des Gaseinlassventils 30 und des Gasauslassventils 31 erfolgt dabei mittels einer Nockenwelle 36 (Figur 2), auf der Nocken 39, 39a und 39b ausgebildet sind, die auf das Gaseinlassventil 30 einwirken. Ferner sind nicht dargestellte Nocken - ggf. auf einer weiteren Nockenwelle vorgesehen, die auf das Gasauslassventil 31 einwirken.

Dem Gaseinlassventil 30 sind insgesamt drei Nocken 39, 39a, 39b (Figur 2) zugeordnet. Die Nocken 39, 39a, 39b wirken über eine Übertragungseinheit 38 auf das Gaseinlassventil 30 ein. Die Übertragungseinheit 38 ist als Tassenstößel ausgebildet. Sie umfasst ein Zylinderelement 38a und ein konzentrisch zu diesem angeordnetes Ring-Zylinderelement 38b. Die Nocke 39 wirkt auf das Zylinderelement 38a ein. Die Nocken 39a, 39b wirken auf das Ring-Zylinderelement 38b ein. In einer Schaltstellung des Tassenstößels wird lediglich der Hub der Nocke 39, der geringer ist als der Nocken 39a und 39b, auf das Gaseinlassventil 30 übertragen. In dieser Schaltstellung wird das Gaseinlassventil 30 mit einem geringen Ventilhub L betrieben. In einer weiteren Schaltstellung des Tassenstößels werden die Hübe der Nocken 39a und 39b auf das Gaseinlassventil 30 übertragen. In der weiteren Schaltstellung des Tassenstößels wird das Gaseinlassventil 30 mit einem hohen Ventilhub H betrieben. Die Schaltstellung des Tassenstößels kann durch eine entsprechende Ansteuerung eines in dem Tassenstößel vorgesehenen Stellglieds erreicht werden und erfolgt bevorzugt hydraulisch.

Der Ventilantrieb 32,33 kann jedoch auch alternativ ausgebildet sein. So kann z.B. die Nockenwelle so ausgebildet sein und mit einem Stellantrieb zusammenwirken, dass je nach gewünschtem Ventilhub verschiedene Nocken auf das Gaswechselventil einwirken.

Der Zylinderkopf 3 (Figur 1) umfasst ferner ein Einspritzventil 34 und eine Zündkerze 35. Alternativ kann das Einspritzventil auch in dem Saugrohr 13 angeordnet sein.

Der Abgastrakt 4 umfasst eine Katalysator 40. Von dem Abgastrakt 4 kann eine Abgasrückführleitung hin zum Ansaugtrakt 1, insbesondere hin zum Sammler 12 geführt sein.

Ferner ist eine Steuereinrichtung 6 vorgesehen, der Sensoren zugeordnet sind, die verschiedene Messgrößen erfassen und jeweils den Messwert der Messgröße ermitteln. Die Steuereinrichtung 6 ermittelt abhängig von mindestens einer der Messgrößen Stellgrößen, die dann in ein oder mehrere Stellsignale zum Steuern der Stellglieder mittels entsprechender Stellantriebe umgesetzt werden.

Die Sensoren sind ein Pedalstellungsgeber 71, welcher die Stellung eines Fahrpedals 7 erfasst, ein Luftmassenmesser 14, welcher einen Luftmassenstrom stromaufwärts der Drosselklappe 11 erfasst, ein Temperatursensor 15, welcher die Ansauglufttemperatur erfasst, ein Drucksensor 16, welcher den Saugrohrdruck erfasst, ein Kurbelwellenwinkelsensor 22, welcher einen Kurbelwellenwinkel erfasst, dem dann eine Drehzahl N zugeordnet wird, ein weiterer Temperatursensor 23, welcher eine Kühlmitteltemperatur erfasst, ein Nockenwellenwinkelsensor 36a, welcher den Nockenwellenwinkel erfasst und eine Sauerstoffsonde 41 welche einen Restsauerstoffgehalt des Abgases erfasst und ggf. ein Sensor, der erfasst, ob das Gaseinlassventil 30 mit geringem oder hohem Ventilhub L,H betrieben wird. Je nach Ausführungsform der Erfindung kann eine beliebige Untermenge der genannten Sensoren oder können auch zusätzliche Sensoren vorhanden sein.

Die Stellglieder sind beispielsweise die Drosselklappe 11, die Gaseinlass- und Gasauslassventile 30, 31, das Einspritzventil 34, die Zündkerze 35, die Verstelleinrichtung 37 oder die Übertragungseinheit 38.

Die Brennkraftmaschine hat neben dem Zylinder Z1 auch weitere Zylinder Z2,Z3,Z4, denen entsprechende Sensoren und Stellglieder zugeordnet sind und die entsprechend gesteuert werden. Die Stellglieder sind so ausgebildet, dass gleichzeitig ein Teil der Gaseinlassventile mit geringem Ventilhub L und ein anderer Teil mit hohem Ventilhub H betrieben werden kann. Gegebenenfalls können die Stellglieder auch so ausgebildet sein, dass die Gaseinlassventile auch noch mit weiteren Ventilhüben VL betrieben werden können. Ferner können alternativ oder zusätzlich auch noch Stellglieder, wie beispielsweise Impulsladeventile vorgesehen sein, die ggf. zylinderindividuell die Luftzufuhr beeinflussen können.

Die Stellglieder, die die Luftzufuhr zu einzelnen oder mehreren Zylindern beeinflussen, sind auch als Einstellvorrichtungen zum Einstellen der Luftzufuhr zu den jeweiligen Brennräumen der jeweiligen Zylinder bezeichnet.

Die Steuereinrichtung 6 entspricht einer Vorrichtung zum Steuern der Brennkraftmaschine.

Wenn bei einer Brennkraftmaschine Stellglieder unterschiedlich angesteuert werden, die die Luftzufuhr zu dem jeweiligen Zylinder Z1 bis Z4 beeinflussen, und sich in Folge dessen während eines Arbeitszyklusses der Brennkraftmaschine deutlich unterschiedliche Luftmassen in verschiedenen Zylindern befinden, können Gruppen von Zylindern gebildet werden, denen jeweils die gleiche Luftmasse pro Arbeitsspiel zugeführt wird und während deren jeweiligen zylindersegmenten das gleiche Verlustdrehmoment maßgeblich ist. Ein tatsächliches Drehmoment TQ, das von je einer der Gruppen erzeugt wird muss gleich sein einem Nettowert TQ-NET des tatsächlichen Drehmoments TQ und zwar für alle Gruppen. Dies ist im folgenden anhand der folgenden Formel dargestellt.

$$TQ_x = TQ\_NET; \quad x = 1 \ldots m \quad (F1)$$

m bezeichnet die Anzahl der Gruppen, x ist ein Zähler für die jeweilige Gruppe. Das tatsächliche Drehmoment TQ, der Nettowert TQ_NET und auch alle weiteren Drehmomente, die im folgenden noch eingefügt werden, beziehen sich jeweils auf dasjenige Drehmoment, das erzeugt werden würde, wenn alle Zylinder während eines Arbeitsspiels ein derartiges Drehmoment erzeugen würden.

Das tatsächliche Drehmoment TQ jeder Gruppe an Zylindern ist durch die folgende Beziehung gegeben

$$TQ_x = TQI_x + TQ\_LOSS_z; \quad x = 1 \ldots m, \quad z = 1 \ldots n \quad (F2)$$

TQI bezeichnet jeweils ein indiziertes Drehmoment und TQ_LOSS ein Verlustdrehmoment. Das Verlustdrehmoment TQ_LOSS hängt maßgeblich ab von der jeweiligen Drehzahl, dem jeweiligen Luftmassenstrom in dem jeweiligen Zylinder Z1 bis Z4, der Kühlmitteltemperatur und/oder einer Öltemperatur. Das Verlustdrehmoment TQ_LOSS ist als negativer Wert definiert. n bezeichnet die unterschiedlichen diskreten Schaltstellungen, die zu entsprechend vielen gleichzeitigen unterschiedlichen Luftmassen in den jeweiligen Zylindern Z1 bis Z4 führen können. z ist ein Index, der dem Verlustdrehmoment TQ_LOSS zugeordnet ist.

Wird die Formel (F2) aufgelöst nach dem indizierten Drehmoment TQI, so ergibt sich folgende Formel

$$TQI_x = TQ_x - TQ\_LOSS_z \quad (F3)$$

Wird anschließend in (F3) die Formel (F1) eingesetzt, so ergibt sich:

$$TQI_x = TQ\_NET - TQ\_LOSS_z \quad (F4)$$

Für das jeweilige indizierte Drehmoment TQIy der jeweiligen Gruppe an Zylindern kann ferner angesetzt werden

$$TQI_x = TQI\_REF_y * EFF\_IGA_x * EFF\_XXX_x \; ; \; y = 1 \ldots n, \quad (F5)$$

TQI_REF bezeichnet ein Referenz-Drehmoment, das sich als indiziertes Drehmoment ergibt, wenn ein vorgegebener Zündwinkel und weitere das Drehmoment beeinflussende Parameter auf vorgegebene Werte eingestellt sind, die beispielsweise so gewählt sind, dass sich dann ein unter entsprechenden Randbedingungen maximales indiziertes Drehmoment ergibt. y ist ein Index, der dem Referenzdrehmoment TQI_REF zugeordnet ist.

EFF_IGA bezeichnet einen Zündwinkelwirkungsgrad, der jeweils bezogen ist auf den Zündwinkel des Referenz-Drehmoments TQI_REF. EFF_XXX bezeichnet einen sonstigen wirkungsgrad und fasst somit alle weiteren Parameter zusammen, durch die das Referenzdrehmoment TQI-REF veränderbar ist, so dass sich das indizierte Drehmoment TQI ergibt. Der sonstige Wirkungsgrad EFF_XXX berücksichtigt insbesondere eine Anfettung oder Abmagerung des in dem jeweiligen Zylinder befindlichen Luft/Kraftstoff-Gemisches aufgrund des Ausgangssignals einer Lambdaregelung.

Im folgenden wird ein Programm beschrieben, das in der Steuereinrichtung 6 gespeichert ist und während des Betriebs der Brennkraftmaschine in der Steuereinrichtung 6 abgearbeitet wird. Dieses Programm wird beispielhaft für den Fall beschrieben, in dem der Ventilhub VL der Gaseinlassventile 30 entweder einen geringen Ventilhub L oder einen hohen Ventilhub H hat und der Ventilhub VL der jeweiligen Gaseinlassventile 30 individuell für jeden Zylinder einzeln oder auch lediglich gruppenweise einstellbar ist.

Das Programm wird in einem Schritt S1 gestartet (Figur 3), der möglichst zeitnah zu einem Start der Brennkraftmaschine durchgeführt wird und in dem gegebenenfalls Variablen initialisiert werden.

In einem Schritt S2 wird geprüft, ob die Ventilhübe VL einzelner Gaseinlassventile 30 dem geringen Ventilhub L entsprechen und die Ventilhübe anderer Gaseinlassventile 30 gleichzeitig dem hohen Ventilhub H entsprechen. Ist dies nicht der Fall, so wird bevorzugt lediglich ein einziger Zündwinkel für alle Zylinder Z1 bis Z4 ermittelt und das Programm verharrt anschließend in einem Schritt S3 für eine vorgegebene Wartezeitdauer, bevor die Bedingung des Schrittes S2 erneut geprüft wird.

Ist die Bedingung des Schrittes S2 hingegen erfüllt, so wird in einem Schritt S4 ein indiziertes Differenzdrehmoment D_TQI ermittelt und zwar abhängig von der Differenz eines indizierten Drehmoments $TQI_H$ bei hohem Ventilhub H und einem indizierten Drehmoment $TQI_L$ bei geringem Ventilhub L. Unter entsprechender Anwendung der Formel (F4) ist das indizierte Drehmoment $TQI_H$ bei hohem Ventilhub H gleich der Differenz des Nettowertes TQ_NET des tatsächlichen Drehmoments TQ und des Verlustdrehmoments $TQ\_LOSS_L$ bei geringem Ventilhub L. Dies gilt für Fälle, in denen während des jeweiligen Arbeitstaktes des jeweiligen Zylinders, der mit hohem Ventilhub H betrieben wird, ein Zylinder, der mit geringem Ventilhub L betrieben wird, sich gerade in seinem Ansaugtakt befindet.

Unter entsprechender Anwendung der Formel (F4) ist das indizierte Drehmoment $TQI_L$ bei niedrigem Ventilhub L gleich der Differenz des Nettowertes TQ_NET des tatsächlichen Drehmoments TQ und des Verlustdrehmoments $TQ\_LOSS_H$ bei hohem Ventilhub L. Dies gilt für Fälle, in denen während des jeweiligen Arbeitstaktes des jeweiligen Zylinders, der mit geringem Ventilhub L betrieben wird, ein Zylinder, der mit hohem Ventilhub H betrieben wird, sich gerade in seinem Ansaugtakt befindet.

Das indizierte Differenzdrehmoment D_TQI ist gleich der Differenz des verlustdrehmoments $TQ\_LOSS_H$ bei hohem Ventilhub H und des Verlustdrehmoments $TQ\_LOSS_L$ bei geringem Ventilhub L. Die Verlustdrehmomente $TQ\_LOSS_H$, $TQ\_LOSS_L$ können beispielsweise abhängig von der Drehzahl, des jeweiligen Luftmassenstroms in den jeweiligen Zylinder Z1 bis Z4, der Kühlmitteltemperatur und/oder der Öltemperatur ermittelt werden.

In einem Schritt S6 wird anschließend ein zündwinkelwirkungsgrad $EFF\_IGA_H$ für die Zylinder bestimmt, deren Ventilhub VL einen hohen Ventilhub H hat. Dies erfolgt abhängig von der in dem Schritt S6 angegeben Beziehung. $FAC_L$ bezeichnet einen Drehmomentfaktor, der das Verhältnis an befeuerten Zylindern der Gruppe der Zylinder 21-Z4 repräsentiert, die mit geringem Ventilhub L betrieben werden, zu der gesamten Anzahl an Zylindern Z1-Z4 der Brennkraftmaschine. Entsprechend bezeichnet ein Drehmomentfaktor $FAC_H$ das Verhältnis der befeuerten Zylinder der Gruppe an Zylindern Z1-Z4, die mit hohem Ventilhub H betrieben werden, zu der gesamten Anzahl an Zylindern Z1-Z4. $TQI\_REF_H$ ist das Referenzdrehmoment, wenn alle Zylinder Z1-Z4 in dem gegebenen Betriebspunkt mit einem hohen Ventilhub H betrieben werden. $EFF\_XXX_H$ ist der entsprechend zugeordnete sonstige Wirkungsgrad. Das indizierte Drehmoment TQI wird abhängig von an dem Fahrerwunsch, beispielsweise ausgedrückt durch die Stellung des Fahrpedals, und unter Berücksichtung weiterer Drehmomentanforderungen von einer anderen Funktion der Steuereinrichtung ermittelt.

In einem Schritt S8 wird ein Zündwinkelwirkungsgrad $EFF\_IGA_L$ für die Zylinder Z1-Z4 ermittelt, die mit einem geringen Ventilhub L betrieben werden. Dies erfolgt entsprechend der in dem Schritt S8 angegebenen Beziehung. $TQI\_REF_L$ bezeichnet ein Referenz-Drehmoment bei geringem Ventilhub L und $EFF\_XXX_L$ einen diesem zugeordneten sonstigen Wirkungsgrad.

Mittels der in den Schritten S6 und S8 ermittelten Zündwinkelwirkungsgrade $EFF\_IGA_H$ und $EFF\_IGA_L$ kann dann einfach gewährleistet werden, dass das pro Arbeitstakt tatsächlich erzeugte Drehmoment TQ nur äußerst geringen Schwankungen unterliegt und somit eine sehr gute Laufunruhe der Brennkraftmaschine gewährleistet ist.

In einem Schritt S10 wird anschließend geprüft, ob der Zündwinkelwirkungsgrad $EFF\_IGA_H$ für die Gruppe an Zylindern Z1 bis Z4 mit dem hohen Ventilhub H kleiner oder gleich ist einem minimalen Zündwinkelwirkungsgrad $EFF\_IGA\_MIN_H$- Ist die Bedingung des Schrittes S10 nicht erfüllt, so wird die Bearbeitung in einem Schritt S14 fortgesetzt, der weiter unten näher erläutert ist.

Ist die Bedingung des Schrittes S10 hingegen erfüllt, so wird in einem Schritt S11 der zündwinkelwirkungsgrad $EFF\_IGA_H$ für die Gruppe an Zylinder mit hohem Ventilhub H gleichgesetzt dem minimalen Zündwinkelwirkungsgrad $EFF\_IGA\_MIN_H$ und zwar in einem Schritt S11.

Anschließend wird in einem Schritt S12 der Zündwinkelwirkungsgrad $EFF\_IGA_L$ für die Gruppe an Zylindern, die mit geringem Ventilhub L betrieben werden entsprechend der in dem Schritt S12 angegebenen Beziehung ermittelt.

Im Anschluss an den Schritt S12 wird die Bearbeitung in dem Schritt S18 fortgesetzt.

In einem Schritt S14 wird geprüft, ob der Zündwinkelwirkungsgrad $EFF\_IGA_L$ für die Gruppe an Zylindern Z1 bis Z4 mit geringem Ventilhub größer oder gleich ist einem maximalen Zündwinkelwirkungsgrad $EFF\_IGA\_MAX_L$. Ist dies nicht der Fall, so wird die Bearbeitung in dem Schritt S18 fortgesetzt. Ist die Bedingung des Schrittes S14 hingegen erfüllt, so wird in einem Schritt S15 dem Zündwinkelwirkungsgrad $EFF\_IGA_L$ der maximale Zündwinkelwirkungsgrad $EFF\_IGA\_MAX_L$ zugeordnet.

In einem anschließenden Schritt S16 wird dann der Zündwinkelwirkungsgrad $EFF\_IGA_H$ abhängig von der in dem Schritt S16 angegebenen Beziehung ermittelt.

Durch das Vorgehen gemäß der Schritte S11 und S12 beziehungsweise der Schritte S15 und S16 kann gewährleistet werden, dass auch wenn die Bedingungen der Schritte S10 beziehungsweise S14 erfüllt sind eine möglichst geringe Laufunruhe der Brennkraftmaschine gewährleistet wird ohne dass es zu einem Klopfen oder zu Zündaussetzern kommt, wobei das gewünschte Drehmoment möglichst genau eingestellt wird.

In einem Schritt S18 wird ein individueller Zündwinkel $IGA_L$ für diejenigen Zylinder Z1 bis Z4 ermittelt, die mit einem geringen Ventilhub L betrieben werden. Dies erfolgt abhängig von dem Zündwinkelwirkungsgrad $EFF\_IGA_L$. Beispielsweise kann dies auch mittels eines Kennfeldes oder durch eine sonstige vorgebbare Beziehung erfolgen.

In einem anschließenden Schritt S20 wird dann ein Zündwinkel $IGA_H$ für die Gruppe an Zylindern Z1 bis Z4 ermittelt, die mit einem hohen Ventilhub H betrieben werden. Dies erfolgt abhängig von dem Zündwinkelwirkungsgrad $EFF\_IGA_H$. Dies kann ebenso wie in dem Schritt S18 mittels entsprechender Kennfeldinterpolation oder auch mittels einer sonstigen Beziehung erfolgen. Die in den Schritten S18 und S20 ermittelten Zündwinkel $IGA_L$ und $IGA_H$ werden dann im folgenden in den jeweiligen Zylindern Z1 bis Z4 entsprechend eingestellt durch entsprechendes Ansteuern der jeweiligen Zündkerzen 35. Im Anschluss an die Bearbeitung des Schrittes S20 wird die Bearbeitung des Programms in dem Schritt S3 fortgesetzt.

Es ist ebenso möglich in den Schritten S6, S8, S11, S12, S15, S16 entsprechende Zündwinkel direkt zu ermitteln und die Bedingungen der Schritte S10 und S14 abhängig zu machen von entsprechenden Zündwinkeln. Die Schritte S18 und S20 können dann entfallen.

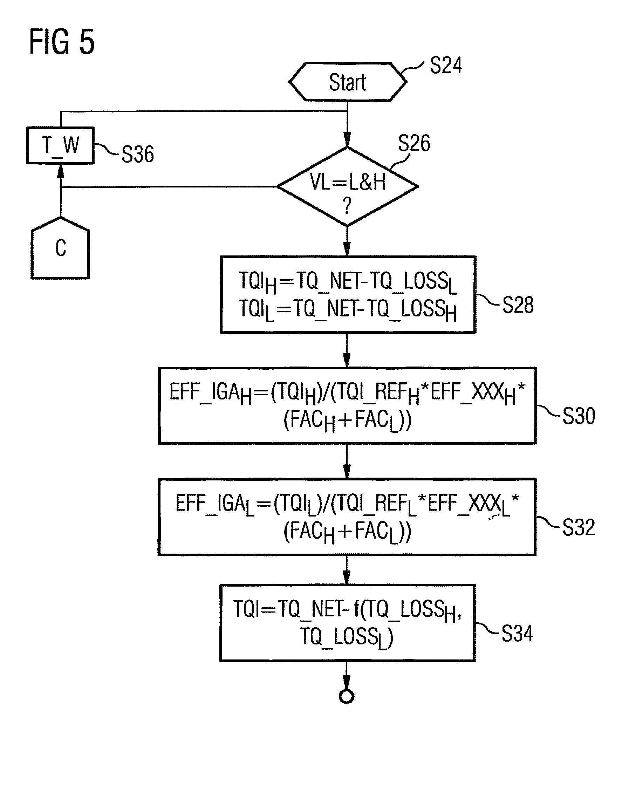

Eine weitere Ausführungsform des Programms der Figuren 3 und 4 wird im folgenden anhand der Figur 5 erläutert. Das Programm wird in einem Schritt S24 gestartet, der dem Schritt S1 entspricht. Schritte S26 und S36 entsprechen den Schritten S2 und S3.

In einem Schritt S28 wird das indizierte Drehmoment $TQI_H$ bei hohem ventilhub durch Bilden der Differenz des Nettowertes TQ_NET des tatsächlichen Drehmoments TQ und des Verlustdrehmoments $TQ\_LOSS_L$ bei niedrigem Ventilhub L ermittelt. Ferner wird das indizierte Drehmoment $TQI_L$ bei niedrigem Ventilhub L durch Bilden der Differenz des Nettowertes TQ_NET des tatsächlichen Drehmoments TQ und des Verlustdrehmoments $TQ\_LOSS_H$ bei hohem Ventilhub H ermittelt.

In einem Schritt S30 wird anschließend der Zündwinkelwirkungsgrad $EFF\_IGA_H$ für die Zylinder bestimmt, deren Ventilhub VL einen hohen Ventilhub H hat. Dies erfolgt abhängig von der in dem Schritt S30 angegebenen Beziehung.

In einem Schritt S32 wird anschließend der Zündwinkelwirkungsgrad $EFF\_IGA_L$ für die Zylinder bestimmt, deren Ventilhub VL einen geringen Ventilhub L hat. Dies erfolgt abhängig von der in dem Schritt S32 angegebenen Beziehung.

In einem Schritt S34 wird das indizierte Drehmoment TQI abhängig von dem Nettowert TQ_NET des tatsächlichen Drehmoments TQ und abhängig von einem durchschnittlichen Verlustdrehmoment pro Arbeitszyklus der Brennkraftmaschine ermittelt, das abhängig von dem Verlustdrehmomenten $TQ\_LOSS_H$ , $TQ\_LOSS_L$ bei hohem Ventilhub H und geringem Ventilhub L ermittelt wird. Im Anschluss an den Schritt S34 wird dann die Bearbeitung in dem Schritt S10 fortgesetzt.

## Patentansprüche

1. Verfahren zum Steuern einer Brennkraftmaschine mit mehreren Zylindern (Z1 bis Z4), die Brennräume aufweisen und denen jeweils eine Zündkerze (35) zugeordnet ist, die zum Zünden eines Luft/Kraftstoff-Gemisches in dem Brennraum ausgebildet ist, und mit mindestens zwei Einstellvorrichtungen zum Einstellen der Luftzufuhr zu den Brennräumen verschiedener Zylinder (Z1 bis Z4), bei dem jeweils ein individueller Zündwinkel ermittelt wird für jede von **mindestens zwei Gruppen** an Zylindern (Z1 bis Z4), denen jeweils die gleiche Luftmasse pro Arbeitsspiel zugeführt werden soll und während deren jeweiligen Arbeitstakten das gleich Verlustdrehmoment maßgeblich ist, wobei das maßgebliche Verlustdrehmoment dasjenige ist, das dem jeweiligen: Zylinder (Z1 bis Z4) zugeordnet ist, der sich während des jeweiligen Arbeitstaktes des jeweiligen Zylinders der jeweiligen Gruppe in seinem Ansaugtakt befindet, wobei der individuelle Zündwinkel je einer Gruppe ermittelt wird abhängig von dem für die jeweilige Gruppe maßgeblichen Verlustdrehmoment.

2. Verfahren nach Anspruch 1,
bei dem der individuelle Zündwinkel je einer Gruppe ermittelt wird abhängig von einer Differenz des für die jeweilige Gruppe maßgeblichen Verlustdrehmoments und dem maßgeblichen Verlustdrehmoment einer anderen Gruppe.

3. Verfahren nach einem der vorstehenden Ansprüche,
bei dem der individuelle Zündwinkel begrenzt wird auf einen minimalen und/oder maximalen Zündwinkel.

4. Verfahren nach Anspruch 3,
bei dem, wenn ein Zündwinkel, der einer Gruppe zugeordnet ist, den minimalen Zündwinkel erreicht, ein anderer Zündwinkel, der einer anderen Gruppe zugeordnet ist, abhängig von dem minimalen Zündwinkel ermittelt wird.

5. Verfahren nach einem der Ansprüche 3 oder 4,
bei dem, wenn ein individueller Zündwinkel, der einer Gruppe zugeordnet ist, den maximalen Zündwinkel erreicht, ein anderer Zündwinkel, der einer anderen Gruppe zugeordnet ist, abhängig von dem maximalen Zündwinkel ermittelt wird.

6. Vorrichtung zum Steuern einer Brennkraftmaschine mit mehreren Zylindern (Z1 bis Z4), die Brennräume aufweisen und denen jeweils eine Zündkerze (35) zugeordnet ist, die zum Zünden eines Luft/Kraftstoff-Gemisches in dem Brennraum ausgebildet ist, und mit mindestens zwei Einstellvorrichtungen zum Einstellen der Luftzufuhr zu den Brennräumen verschiedener Zylinder (Z1 bis Z4), mit Mitteln,

- die jeweils einen individuellen Zündwinkel ermitteln für jede **vo**n **mindestens zwei Gruppen** an Zylindern (Z1 bis Z4), denen jeweils die gleiche Luftmasse pro Arbeitsspiel zugeführt werden soll und während deren jeweiligen Arbeitstakten das gleiche Verlustdrehmoment maßgeblich ist, wobei das maßgebliche Verlustdrehmoment dasjenige ist, das dem jeweiligen Zylinder (Z1 bis Z4) zugeordnet ist, der sich während des jeweiligen Arbeitstaktes des jeweiligen Zylinders der jeweiligen Gruppe in seinem Ansaugtakt befindet, und
- die den individuellen Zündwinkel je einer Gruppe ermitteln abhängig von dem für die jeweilige Gruppe maßgeblichen Verlustdrehmoment.

## Claims

1. Method for controlling an internal combustion engine comprising a plurality of cylinders (Z1 to Z4) having combustion chambers and each being associated with a spark plug (35) designed for igniting a mixture of air and fuel in the combustion chamber, and comprising at least two adjusting devices for adjusting the air supply to the combustion chambers of different cylinders (Z1 to Z4), in which method an individual ignition angle is determined respectively for each **of at least two groups** of cylinders (Z1 to Z4) to which the same air mass per working cycle is respectively to be supplied and during the respective working cycles of which the same loss torque is decisive, wherein the decisive loss torque is the one associated with the respective cylinder (Z1 to Z4) that is in its intake cycle during the respective working cycle of the respective cylinder of the respective group, wherein the individual ignition angle for each group is determined as a function of the decisive loss torque for the respective group.

2. Method according to claim 1,
in which the individual ignition angle for each group is determined as a function of a difference between the decisive loss torque for the respective group and the decisive loss torque for another group.

3. Method according to any one of the preceding claims,
in which the individual ignition angle is limited to a minimum and/or maximum ignition angle.

4. Method according to claim 3,
in which, when an ignition angle which is associated with a group reaches the minimum ignition angle, another ignition angle which is associated with another group is determined as a function of the minimum ignition angle.

5. Method according to any one of claims 3 or 4,
in which, when an individual ignition angle which is associated with a group reaches the maximum ignition angle, another ignition angle which is associated with another group is determined as a function of the maximum ignition angle.

6. Device for controlling an internal combustion engine comprising a plurality of cylinders (Z1 to Z4) having combustion chambers and each being associated with a spark plug (35) designed for igniting a mixture of air and fuel in the combustion chamber, and comprising at least two adjusting devices for adjusting the air supply to the combustion chambers of different cylinders (Z1 to Z4), comprising means,

- which determine respectively an individual ignition angle for each **of at least two groups** of cylinders (Z1 to Z4) to which the same air mass per working cycle is respectively to be supplied and during the respective working cycles of which the same loss torque is decisive, wherein the decisive loss torque is the one associated with the respective cylinder (Z1 to Z4) that it is in its intake cycle during the respective working cycle of the respective cylinder of the respective group, and
- which determine the individual ignition angle for each group as a function of the decisive loss torque for the respective group.

**Revendications**

1. Procédé de commande d'un moteur à combustion interne comprenant plusieurs cylindres (Z1 à Z4) présentant des chambres de combustion et à chacun desquels est associée une bougie d'allumage (35) conçue pour allumer un mélange air/carburant dans la chambre de combustion, le moteur comprenant également au moins deux dispositifs de réglage pour ajuster l'aspiration d'air dans les chambres de combustion des divers cylindres (Z1 à Z4), l'ajustement impliquant la détermination chaque fois d'un angle d'allumage individuel pour chacun des au moins deux groupes de cylindres (Z1 à Z4) auxquels doit chaque fois être envoyée la même masse d'air par cycle de travail et au cours des cycles de travail respectifs desquels le même couple de pertes de rotation est déterminant, le couple de pertes de rotation déterminant étant celui qui est associé au cylindre respectif (Z1 à Z4) qui au cours du cycle de travail respectif du cylindre respectif du groupe respectif se trouve dans son temps d'aspiration, l'angle d'allumage individuel de chaque groupe étant déterminé en fonction du couple de pertes de rotation déterminant pour le groupe considéré.

2. Procédé selon la revendication 1, au cours duquel l'angle d'allumage individuel de chaque groupe est déterminé en fonction d'une différence entre le couple de pertes de rotation déterminant pour le groupe considéré et le couple de pertes de rotation déterminant d'un autre groupe.

3. Procédé selon l'une des revendications précédentes, au cours duquel l'angle d'allumage individuel est limité à un angle d'allumage minimal et/ou maximal.

4. Procédé selon la revendication 3, au cours duquel, lorsqu'un angle d'allumage associé à un groupe atteint l'angle d'allumage minimal, un autre angle d'allumage associé à un autre groupe est déterminé en fonction de l'angle d'allumage minimal.

5. Procédé selon l'une des revendications 3 ou 4, au cours duquel, lorsqu'un angle d'allumage associé à un groupe atteint l'angle d'allumage maximal, un autre angle d'allumage associé à un autre groupe est déterminé en fonction de l'angle d'allumage maximal.

6. Dispositif de commande d'un moteur à combustion interne comprenant plusieurs cylindres (Z1 à Z4) présentant des chambres de combustion et à chacun desquels est associée une bougie d'allumage (35) conçue pour allumer un mélange air/carburant dans la chambre de combustion, le moteur comprenant également au moins deux dispositifs de réglage pour ajuster l'aspiration d'air dans les chambres de combustion des divers cylindres (Z1 à Z4), ce dispositif comprenant des moyens

qui déterminent chaque fois l'angle d'allumage pour chacun des au moins deux groupes de cylindres (Z1 à Z4) auxquels doit chaque fois être envoyée la même masse d'air par cycle de travail et au cours des cycles de travail respectifs desquels le même couple de pertes de rotation est déterminant, le couple de pertes de rotation déterminant étant celui qui est associé au cylindre respectif (Z1 à Z4) qui au cours du cycle de travail respectif du cylindre respectif du groupe respectif se trouve dans son temps d'aspiration,

et qui déterminent l'angle d'allumage individuel de chaque groupe en fonction du couple de pertes de rotation déterminant pour le groupe considéré.

**FIG 1**

**FIG 2**

## FIG 3

$$D\_TQI = TQI_H - TQI_L = TQ\_LOSS_H - TQ\_LOSS_L \quad \text{S4}$$

$$EFF\_IGA_H = (TQI + D\_TQI * FAC_L) / (TQI\_REF_H * EFF\_XXX_H * (FAC_H + FAC_L)) \quad \text{S6}$$

$$EFF\_IGA_L = (TQI - D\_TQI * FAC_H) / (TQI\_REF_L * EFF\_XXX_L * (FAC_H + FAC_L)) \quad \text{S8}$$

S10: $EFF\_IGA_H \leq EFF\_IGA\_MIN_H$ ?

$$EFF\_IGA_H = EFF\_IGA\_MIN_H \quad \text{S11}$$

$$EFF\_IGA_L = (TQI - TQI\_REF_H * EFF\_XXX_H * EFF\_IGA\_MIN_H * FAC_H) / (TQI\_REF_L * EFF\_XXX_L * FAC_L) \quad \text{S12}$$

# FIG 4

A

S14
$$EFF\_IGA_L \geq EFF\_IGA\_MAX_L \; ?$$

$$EFF\_IGA_L = EFF\_IGA\_MAX_L$$ S15

$$EFF\_IGA_H = (TQI-TQI\_REF_L*EFF\_XXX_L*EFF\_IGA\_MAX_L*FAC_L)/(TQI\_REF_H*EFF\_XXX_H*FAC_H)$$ S16

B

$$IGA_L = f(EFF\_IGA_L)$$ S18

$$IGA_H = f(EFF\_IGA_H)$$ S20

C

## FIG 5

Start — S24

T_W — S36

C

VL=L&H ? — S26

$$TQI_H = TQ\_NET - TQ\_LOSS_L$$
$$TQI_L = TQ\_NET - TQ\_LOSS_H$$ — S28

$$EFF\_IGA_H = (TQI_H)/(TQI\_REF_H * EFF\_XXX_H * (FAC_H + FAC_L))$$ — S30

$$EFF\_IGA_L = (TQI_L)/(TQI\_REF_L * EFF\_XXX_L * (FAC_H + FAC_L))$$ — S32

$$TQI = TQ\_NET - f(TQ\_LOSS_H, TQ\_LOSS_L)$$ — S34

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

*   EP 1323902 A2